# EUROPÄISCHE PATENTANMELDUNG

(11) **EP 1 341 364 A2**
(43) Veröffentlichungstag der Anmeldung: **03.09.2003**
(21) Anmeldenummer: 03002517.5
(22) Anmeldetag: 04.02.2003
(51) Int. Cl.: H04M 7/00

(54) **Verfahren und Vorrichtung zur Nutzung eines Telephonie-Dienstes in einer Web-basierten Applikation**

(30) Priorität: 06.02.2002 DE 10204687
(71) Anmelder: Tenovis GmbH & Co. KG, 60326 Frankfurt am Main (DE)
(72) Erfinder: Grosch, Franz-Josef, 64297 Darmstadt (DE)
(74) Vertreter: Patentanwaltskanzlei WILHELM & BECK

(57) **Zusammenfassung**

Bei der Nutzung des Internets werden heute bereits verschiedene Dienste wie elektronische Post, Such- und Recherchefunktionen, Diskussionsforen usw. angeboten. Diese Dienste benutzen in der Regel Web-Applikationen, die als Softwareprogramme ausgebildet und gegebenenfalls nach einer entsprechenden Legitimierung von jedem Internet-Teilnehmer nutzbar sind. Erfindungsgemäß wird vorgeschlagen, als weiteren Dienst einen Telephonie-Dienst in einer Web-Applikation einzuführen, der vergleichbar ist mit einem Briefkasten im Internet. Im Gegensatz zu bekannten Telefondiensten über das Internet, bei denen das Internet selbst als Telefonnetz genutzt wird, dient beim Erfindungsgegenstand das Internet zu Steuerzwecken von Funktionalitäten einer Telefonanlage (5), die an einem beliebigen Ort angeordnet sein kann. Für die Sprachübertragung kann dabei ein beliebiges Netz genutzt werden. Die Steuerung erfolgt über einen Telephonie-Server (4), der über das Internet (b) einen Zugriff auf die Funktionalitäten der Telefonanlage (5) hat.

## Beschreibung

Die Erfindung geht aus von einem Verfahren zur Nutzung eines Telephonie-Dienstes in einer Web-Applikation, wobei ein Computer, der vorzugsweise in räumlicher Nähe zu einem Telefon eines Teilnehmers angeordnet ist, mit Hilfe eines Browsers über das Internet mit einer Schnittstelle eines Web-Applikations-Servers verbunden ist, beziehungsweise von einer Vorrichtung für einen Telephonie-Dienst in einer Web-Applikation nach der Gattung der nebengeordneten Ansprüche 1 und 8. Es ist schon bekannt, dass für die Steuerung und Nutzung von Funktionalitäten eines Telefons oder einer Telefonanlage ein Computer genutzt werden kann. Bei dem sogenannten CTI-Verfahren (Computer Telephonie Integration) sind zwei unterschiedliche Verfahren gebräuchlich. Bei der Teilnehmerseitigen Integration (Client-seitige Integration) ist auf dem Computer eine Software installiert (Fat-Client), mit der der Telefonapparat des Teilnehmers gesteuert wird. Der Computer wird zu diesem Zweck über ein Verbindungskabel mit dem Telefonapparat verbunden. Über dieses Verbindungskabel können nun beispielsweise bei einem Comfort-Telefon dessen Funktionen vom Computer aus gesteuert werden.

Zum anderen ist bei der ebenfalls bekannten serverseitigen Integration die Telefonanlage mit mehreren Schnittstellen wie CSTA, TAPI, CMIP, MML usw. ausgebildet, über die die Funktionalitäten der Telefonanlage vom Computer aus gesteuert werden können. Üblicherweise werden die Funktionalitäten der Telefonanlage von CTI- Applikationen oder von diversen Administrations-Werkzeugen gesteuert.

In einem anderen Zusammenhang ist weiterhin bekannt, dass bei großen Software-Applikationen Web-basierte Architekturen verwendet werden.

Eine weitere bekannte Lösung zur Nutzung des Internets stellt die Telephonie über das Internet dar, genannt VoIP (Voice over Internet Protokoll). Bei dieser Art des Telefonierens werden die Leitungen des Internets im Wesentlichen für die Übertragung der Sprachsignale zwischen zwei oder mehrere Telefonteilnehmer genutzt. Die Vermittlung von Telefongesprächen über das Internet und insbesondere die Steuerung einer Telefonanlage ist bei dieser Art der Nutzung des Internets jedoch nur eingeschränkt möglich.

Das erfindungsgemäße Verfahren zur Nutzung eines Telephonie-Dienstes in einer Web-Applikation beziehungsweise die Vorrichtung für einen Telephonie-Dienst mit den kennzeichnenden Merkmalen der nebengeordnete Ansprüche 1 und 8 hat demgegenüber den Vorteil, dass als weiterer Dienst einer Web-Applikation der Telephonie-Dienst genutzt werden kann. Insbesondere ergibt sich durch die Kombination des Internets mit dem Telephonie-Dienst auch die vorteilhafte Lösung, über das Internet die Funktionalitäten einer Telefonanlage zu nutzen. Das bedeutet, dass die Telefonanlage praktisch an einem beliebigen Ort stehen kann und dass jeder (zugelassene) Teilnehmer über das Internet auf diese zugreifen kann. Der Teilnehmer muss lediglich die Web-Seite der gewünschten Telefonanlage auf seinem Computer aufrufen und erhält dann entsprechende Darstellungen und Auswahlmenüs von der Telefonanlage, über die er deren Funktonalitäten nutzen kann. Für diverse Funktionalitäten wäre eine eigene Telefonanlage dann nicht mehr erforderlich. Das Verfahren funktioniert ähnlich, wie beispielsweise ein Briefkasten mit einer Mail-Adresse, den ein Teilnehmer bei einem Internet-Provider beantragt hat. Über diesen Briefkasten kann der Teilnehmer ebenfalls beispielsweise seine eingegangene Post abrufen oder Briefe versenden. Eine vorteilhafte alternative Lösung stellt eine beliebige Software-Applikation dar, die über das Internet mit der Schnittstelle des Web-Applikations-Servers verbunden ist und die Telefonanlage dann automatisch steuert. Eine Website ist dann nicht mehr erforderlich.

Durch die in den abhängigen Ansprüchen aufgeführten Maßnahmen sind vorteilhafte Weiterbildungen und Verbesserungen des in den nebengeordneten Ansprüchen 1 und 8 aufgeführten Verfahrens beziehungsweise der Vorrichtung mit einem Telephonie-Server gegeben. Als besonders vorteilhaft wird dabei angesehen, dass die Nutzung der Funktionalitäten der Telefonanlage in einer 3-schichtigen Web-Applikation erfolgt. Dadurch werden zusätzliche Installationen bei den Nutzern in vorteilhafter Weise überflüssig. Der per se bekannte Browser und Web-Applikations-Server übernehmen die Steuerungsaufgaben, wie sie bisher üblich waren. Zusätzlich wird in einer dritten Schicht ein Telephonie-Server installiert, der die Funktionalitäten der Telefonanlage steuert.

Vorteilhaft ist weiter, dass der Telephonie-Server die Funktionalitäten der Telefonanlage in einer 3-schichtigen Web-Applikation nutzt, wobei der Telephonie-Server neben dem Browser und dem Web-Applikations-Server die dritte Schicht in der Web-Applikation bildet.

Ein weiterer Vorteil wird auch darin gesehen, dass der Telephonie-Server von einem Softwareprogramm gesteuert wird, mit dem über das Internet oder ein Intranet die Funktionalitäten der Telefonanlage ansprechbar sind. Dadurch kann auf einfache Weise eine Anpassung des Softwareprogramms an die Telefonanlage erzielt werden. Insbesondere lassen sich dadurch auch leicht Anwendungsprofile erstellen und Zugangsberechtigungen regeln.

Eine günstige Lösung erscheint auch, dass der Telephonie-Server die Funktionalitäten steuert, die dem Teilnehmer schon von seinem Telefon her bekannt sind. Dadurch vereinfacht sich die Umstellung auf den neuen Web-Dienst, so dass der Lernaufwand für den Teilnehmer minimiert wird.

Ein besonderer Vorteil besteht auch darin, dass der Telephonie-Server die Funktionalitäten einer externen Telefonanlage über das Internet nutzbar macht. Dadurch kann der Teilnehmer sich beispielsweise eine eigene Telefonanlage ersparen, dennoch aber viele Funktionalitäten der Telefonanlage nutzen, wenn dies von dem Betreiber der externen Telefonanlage beispielsweise gegen Zahlung einer Gebühr zugelassen ist.

Der Telephonie-Server ist vorteilhaft derart aufgebaut, dass er auch die Verbindung zwischen zwei beliebigen Teilnehmern über das Internet steuert. Dabei können die Teilenehmer beispielsweise das öffentliche Telefonnetz weiterhin nutzen. Sie müssen nicht unbedingt auch über das Internet telefonieren. Lediglich die Steuerung läuft über das Internet.

Günstig erscheint auch die Lösung, dass der Telephonie-Server die Zugangsberechtigung für einen Teilnehmer steuert. Insbesondere kann mit der Zugangsberechtigung auch der Umfang gesteuert werden, für den die Nutzung der Telefonanlage freigegeben wird. Auf diese Weise kann wirkungsvoll ein Missbrauch vermieden und Schaden verhindert werden.

Eine günstige alternative Lösung wird auch darin gesehen, dass der Telephonie-Server als Web-Service im Internet ausgebildet ist. Dadurch könnten in vorteilhafter Weise weitere Software-Applikationen den Telephonie-Dienst über das Internet nutzen.

Der Erfindung liegt die Aufgabe zu Grunde, ein Verfahren beziehungsweise eine Vorrichtung anzugeben, mit dem in einer Web-Applikation ein Telephonie-Dienst ermöglicht wird. Diese Aufgabe wird mit den Merkmalen der nebengeordneten Ansprüche 1 und 8 gelöst.

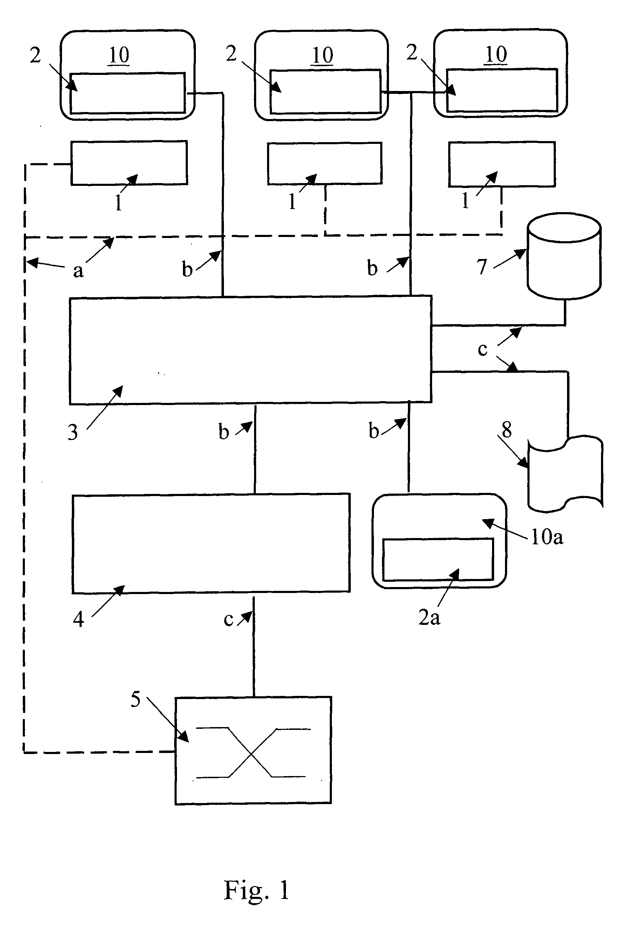

Ein Ausführungsbeispiel der Erfindung ist in der Zeichnung dargestellt und wird in der nachfolgenden Beschreibung näher erläutert.

Die Figur zeigt bei einem Ausführungsbeispiel eine 3-schichtige Web-Applikation, bei der als dritte Schicht ein Telephonie-Server angeordnet ist.

Heutige Web-Applikationen arbeiten mit einem Computer, in dem häufig ein Web-Browser (Browser) 2 installiert ist. Der Browser 2 ist eine spezielle Anwendersoftware, die einerseits Websites von einem Web-Server anfordert und andererseits Daten mittels des http-Protokolls (Hypertext Transport Protokoll) an den Web-Server zurücksendet.

Das Ausführungsbeispiel der Erfindung zeigt gemäß der Figur in schematischer Ausführung eine Anordnung mit beispielsweise drei Telefonen 1 als Endgeräte, in deren räumlicher Nähe jeweils ein Computer 10 mit einem Browser 2 angeordnet ist. Mit Hilfe des Computers 10 kann der jeweilige Browser 2 aktiviert werden. Die Anzahl der Telefone 1 und Computer 10 kann beliebig sein und ist durch die Erfindung nicht beschränkt.

Die Telefone 1 können handelsübliche Tischapparate oder Handys sein, die aber keine direkte Verbindung zum Computer 10, zum Internet b oder zu einem Intranet c haben.

Alle Browser 2 greifen über das Internet b auf eine Schnittstelle eines Web-Applikations-Servers 3 zu, der die einzelnen Web-Dienste steuert. Dieses können auch die bekannten Web-Dienste wie die elektronische Post (email), Diskussionsforen (chatten) usw. sein. Der Web-Applikations-Server 3 wird als zweite Schicht in der Web-Applikation bezeichnet. Der Web-Applikations-Server 3 hat des weiteren die Möglichkeit, über das Internet b oder Intranet c auf einen entsprechenden Datenbank-Server 7, einen Mail-Server 8 oder dergleichen zuzugreifen. Der Web-Applikations-Server 3 kann auch über eine Schnittstelle, die in der Regel als Softwareprogramm realisiert ist, über das Internet b von einem weiteren Computer 10a gesteuert werden, der eine entsprechende Software-Applikation 2a aufweist. Des weiteren ist der Web-Applikations-Server 3 über das Internet b mit einem Telephonie-Server 4 verbunden, der vorzugsweise über ein Intranet c eine Telefonanlage 5 steuert.

Bei der erfindungsgemäßen Web-Applikation stellt nun der Browser 2 die erste Schicht und der Web-Applikations-Server 3 die zweite Schicht dar. Diese Schichten sind per se bekannt. Ein wesentlicher Gedanke der Erfindung ist nun, in einer dritten Schicht den Telephonie-Server 4 anzuordnen, auf den der Web-Applikations-Server 3 ebenfalls zugreifen kann. Dieser Telephonie-Server 4 ist als Applikation für den Telephonie-Dienst ausgebildet und bearbeitet alle Aufgaben, die zur Nutzung der Funktionalitäten der Telefonanlage 5 zu lösen sind. Dies können beispielsweise Funktionalitäten wie die Rufweiterleitung, Rufumleitung, Anrufspeicherung, Adressbuch, Gebührenanzeige, Freischalten, Verbindungsaufbau usw. sein.

Der Telephonie-Server 4 ist des weiteren mit der Telefonanlage 5 verbunden, an die auch die einzelnen Telefone (Endgeräte) 1 über ein privates, ein öffentliches oder sonstiges Telefonnetz a angeschlossen sind (siehe gestrichelt gezeichnete Linien in Figur). Die Telefonanlage 5 kann zusammen mit dem Telephonie-Server 4 räumlich an einem beliebigen Ort stehen, je nach Ausgestaltung der Erfindung. Sie kann beispielsweise eine Firmenanlage sein, zu der ein Teilnehmer von zu Hause aus über das öffentliche Telefonnetz Zugang hat. Alternativ können die einzelnen Telefone 1 über ein privates Telefonnetz a mit der Telefonanlage 5 verbunden sein.

Der Telephonie-Server 4 steuert und verwaltet die eigentlichen Aufgaben des Telephonie-Dienstes. Er bedient sich dabei eines Softwareprogramms, das von dem Web-Applikations-Server 3 gesteuert werden kann. Der Telephonie-Server 4 wird zur Durchführung seiner Aufgaben über das Internet b oder das Intranet c angesprochen, wie der Figur weiter entnehmbar ist. Der Telephonie-Server 4 ist somit eine Backend-Komponente wie die Datenbank 7 oder der Mail-Server 8.

Wie der Figur weiter zu entnehmen ist, wird die Telefonanlage 5 indirekt über den Browser 2, den Web-Applikations-Server 3 und den Telephonie-Server 4 gesteuert. Das bedeutet, dass die Steuerbefehle des Browsers 2 stets über den Web-Applikations-Server 3 zum Telephonie-Server 4 laufen und umgekehrt. Der Telephonie-Dienst wird somit über das Internet b gesteuert. Wie das eigentliche Gespräch geführt wird, ist dabei irrelevant. Es kann ebenfalls übers Internet (VoIP, Voive over Internet Protokoll) oder über ein klassisches Telefonnetz geführt werden.

Beispielsweise löst ein Teilnehmer (Client) in einer beliebigen Web-Applikation, also über das Internet b, von zu Hause aus einen Call in seiner Firma aus und wird mit seinem Telefonapparat oder seinem Handy mit einem gewünschten weiteren Teilnehmer verbunden. Die Telefonanlage 5 in der Firma verbindet somit den Teilnehmer mit dem gewünschten weiteren Teilnehmer.

Bei einem weiteren Beispiel wird der Teilnehmer von zu Hause aus wieder über das Internet mit der Telefonanlage 5 seiner Firma verbunden und ruft die Funktionalität ,Anrufliste anzeigen' auf. Er erhält nun zu Hause im Browser 2 die Anrufliste mit allen Gesprächspartnern, die den Teilnehmer während seiner Abwesenheit angerufen haben. Der Teilnehmer kann nun ebenfalls über das Internet seine Telefonliste abarbeiten. Dies ist möglich, weil der Telephonie-Server 4 dem Teilnehmer die Telefonanlage der Firma über das Web zur Verfügung stellt, so dass der Teilnehmer über den Web-Applikations-Server 3 Telefongespräche initiieren kann. Der Teilnehmer wählt dazu mit seinem Computer 10 über das Internet b die entsprechende Website an und sieht dann auf seinem Computer virtuell die Telefonanlage 5 mit der Anrufliste, so dass er erkennen kann, wer alles in der Zwischenzeit bei ihm angerufen hat.

Zur Abarbeitung der Anrufliste genügt es, die angezeigte Rufnummer oder Internetadresse anzuklicken, um einen ausgewählten Anrufer zurückzurufen. Der Telephonie-Server 4 sorgt nun über das Internet b dafür, dass nun die Telefonanlage 5 die Verbindung zwischen den beiden Teilnehmern vermitteln kann. Der Telephonie-Server 4 ist also wie ein Postfach über das Internet b ansprechbar und nutzbar.

Das Einbinden des Telephonie-Servers 4 kann auf zwei Arten erfolgen: zum einen mit Hilfe des Computers 10 und den Browser 2, der über das Internet b auf den Web-Applikations-Server 3 zugreift. Andererseits kann der Telephonie-Server 4 im Internet aufgestellt sein und als Telephonie-Service angeboten werden. Er besitzt dann eine entsprechende Web-Service-Schnittstelle, auf die dann die Software-Applikation 2a zugreifen kann. Der Telephonie-Service vermittelt dann zum Beispiel Telefongespräche oder Gespräche zu günstigen Tarifen (Callback-Nummern), so dass beispielsweise ein Teilnehmer mit seinem Handy billiger telefonieren kann. Der Teilnehmer klickt dann die Callback-Nummer an und der Web-Applikations-Server 3 vermittelt den Gesprächswunsch so, dass der Teilnehmer über den günstigen Tarif zurückgerufen beziehungsweise mit dem gewünschten Teilnehmer verbunden wird.

Die Telefonanlage 5 stellt somit in Kombination mit dem Telephonie-Server 4 einen neuen Telephonie-Service in einer Web-Applikation dar.

Zu dem oben genannten Beispiel wird nachfolgend ein praktisches Anwendungsbeispiel für einen Telephonie-Dienst an Hand des Onlineshoppings näher erläutert. Ein Betreiber einer Shopping-Website benutzt aus einem Online-Shop-Server heraus eine Telefonanlage 5 als Web-Service für ,Web-Callbacks'. Der Teilnehmer wählt die gewünschte Website an und gibt die Rufnummer seine Telefons oder Handys 1 ein. Er klickt dann auf einen Rückrufknopf im Browser 2, der auf seinem Computer-Bildschirm angezeigt wird, so dass der Online-Shop-Server weiß, dass der Teilnehmer zurückgerufen werden möchte. Der Online-Shop-Server spricht nun den Telephonie-Dienst über das Internet b an. Der Telephonie-Dienst vermittelt daraufhin eine Telefonverbindung zwischen dem Telefon eines Beraters des Onlineshops und dem Telefon 1 des Kunden. Die Gesprächskosten übernimmt vorzugsweise der Shop-Betreiber.

### Bezugszeichenliste

- 1: Telefon
- 2: Browser
- 2a: Software-Applikation
- 3: Web-Applikations-Server
- 4: Telephonie-Server
- 5: Telefonanlage
- 7: Datenbank-Server
- 8: Mail-Server
- 10: Computer
- 10a: weiterer Computer
- a: Telefonnetz (öffentliches, privates, für die Sprachübertragung)
- b: Internet
- c: Intranet

## Patentansprüche

1. Verfahren zur Nutzung eines Telephonie-Dienstes in einer Web-Applikation, wobei ein Computer (10), der vorzugsweise in räumlicher Nähe zu einem Telefon (1) eines Teilnehmers angeordnet ist, mit Hilfe eines Browsers (2) über das Internet (b) mit einer Schnittstelle eines Web-Applikations-Servers (3) verbunden ist, und wobei der Web-Applikations-Server (3) wenigstens eine Website aufweist, auf die der Computer (10) zugreifen kann, **dadurch gekennzeichnet, dass** die Website zur Nutzung der Funktionalitäten einer Telefonanlage (5) ausgebildet ist, oder dass ein weiterer Computer (10a) eine Software-Applikation (2a) aufweist, mit der die Schnittstelle des Web-Applikations-Servers (3) angesprochen wird, um die Funktionalitäten der Telefonanlage (5) zu steuern.

2. Verfahren nach Anspruch 1, **dadurch gekennzeichnet, dass** die Nutzung der Funktionalitäten der Telefonanlage (5) in einer 3-schichtigen Web-Applikation erfolgt, wobei eine erste Schicht durch den Browser (2), eine zweite Schicht durch den Web-Applikations-Server (3) und eine dritte Schicht durch einen Telephonie-Server (4) gebildet wird.

3. Verfahren nach einem der vorhergehenden Ansprüche, **dadurch gekennzeichnet, dass** der Telephonie-Server (4) von einem Softwareprogramm gesteuert wird, mit dem über das Internet (b) oder ein Intranet die Funktionalitäten der Telefonanlage (5) ansprechbar sind.

4. Verfahren nach einem der vorhergehenden Ansprüche, **dadurch gekennzeichnet, dass** der Telephonie-Server (4) Funktionalitäten wie Rufweiterleitung, Rufumleitung, Anrufspeicherung, Adressbuch, Gebührenanzeige, Freischalten, Verbindungsaufbau usw. steuert.

5. Verfahren nach einem der vorhergehenden Ansprüche, **dadurch gekennzeichnet, dass** der Telephonie-Server (4) über das Internet (b) eine Funktionalität einer externen Telefonanlage (5) nutzt, die mit dem Internet (b) verbunden ist.

6. Verfahren nach einem der vorhergehenden Ansprüche, **dadurch gekennzeichnet, dass** der Telephonie-Server (4) die Verbindung zwischen zwei beliebigen Telefonanlagen (5) im Internet steuert.

7. Verfahren nach einem der vorhergehenden Ansprüche, **dadurch gekennzeichnet, dass** der Telephonie-Server (4) eine Einrichtung zur Prüfung einer Zugangsberechtigung aufweist.

8. Vorrichtung für einen Telephonie-Dienst in einer Web-Applikation zur Durchführung des Verfahrens nach einem der vorhergehenden Ansprüche, mit einem Computer (10), der über das Internet (b) mit einem Web-Applikations-Server (3) verbunden ist, **dadurch gekennzeichnet, dass** der Web-Applikations-Server (3) über das Internet (b) mit einem Telephonie-Server (4) und der Telephonie-Server (4) mit einer Telefonanlage (5) verbunden ist, und dass der Telephonie-Server (4) ausgebildet ist, Funktionalitäten der Telefonanlage (5) über das Internet (b) oder ein Intranet (c) zu steuern.

9. Vorrichtung nach Anspruch 8, **dadurch gekennzeichnet, dass** der Telephonie-Server (4) ein Softwareprogramm aufweist, mit dem die Funktionalitäten der Telefonanlage (5) steuerbar sind.
